# EUROPÄISCHE PATENTSCHRIFT

(11) **EP 2 692 124 B1**
(45) Veröffentlichungstag und Bekanntmachung des Hinweises auf die Patenterteilung: **27.07.2016**
(21) Anmeldenummer: 12713063.1
(22) Anmeldetag: 28.03.2012
(51) Int. Cl.: H04N 1/00, H04N 1/401

(54) **VERFAHREN ZUR HERSTELLUNG VON DEKORPAPIER SOWIE DEKORPAPIER**
METHOD FOR PRODUCING DECORATIVE PAPER, AND DECORATIVE PAPER
PROCÉDÉ DE FABRICATION DE PAPIER DÉCORATIF AINSI QUE PAPIER DÉCORATIF

(30) Priorität: 30.03.2011 DE 102011015603
(43) Veröffentlichungstag der Anmeldung: 05.02.2014
(73) Patentinhaber: Fritz Egger GmbH & Co. OG, 6380 St. Johann in Tirol (AT)
(72) Erfinder: DODDS, Royce, 59494 Soest (DE); BAAIJENS, Gertjan, 59494 Soest (DE)
(74) Vertreter: Cohausz & Florack
(86) Internationale Anmeldenummer: PCT/EP2012/055506
(87) Internationale Veröffentlichungsnummer: WO 2012/130877

(56) Entgegenhaltungen:
- DE-A1-102008 033 273
- US-A- 5 819 655
- MUENGER K: "THE UGRA/FOGRA DIGITAL CONTROL WEDGE AND ITS APPLICATION", TAGA PROCEEDINGS, XX, XX, 5. Mai 1991 (1991-05-05), Seiten 48-62, XP008019219,
- WALENSKI W ED - WALENSKI W: "DRUCKKONTROLLstreifen FUER DEN OFFSETDRUCK UND DIE OFFSETKOPIE", 1. Januar 1991 (1991-01-01), OFFSETDRUCK. MASCHINEN , VERFAHRENSTECHNIKEN, PRODUKTIONSMITTEL, FRANKFURT, POLYGRAPH VERLAG, DE, PAGE(S) 188 - 193,1, XP002177788, das ganze Dokument

## Beschreibung

Die Erfindung betrifft ein Verfahren zur Herstellung von Dekorpapier, bei dem ein Druckpapier bereit gestellt wird, vorzugsweise durch Abrollen von einer Rolle, bei dem das Druckpapier mittels einer digitalen Druckvorrichtung mit einem Dekor bedruckt wird und bei dem das Druckpapier mittels der digitalen Druckvorrichtung in einem randseitigen Teststreifen mit mindestens einem Testmuster bedruckt wird, wobei die Druckvorrichtung für mindestens zwei verschiedene Druckfarben jeweils ein Auftragsmittel, vorzugsweise jeweils mindestens eine Düse, aufweist. Weiterhin betrifft die Erfindung noch ein Dekorpapier.

Dekorpapiere werden im Stand der Technik insbesondere bei der Herstellung von Laminaten verwendet, beispielsweise zur Gestaltung von Boden-, Wand-, Decken- oder Möbelelementen. Durch bedruckte Dekorpapiere können diese Bauelemente mit einem nahezu beliebigen Erscheinungsbild versehen werden. Bei der Herstellung solcher Dekorpapiere werden im Stand der Technik digitale Druckvorrichtungen, beispielsweise Tintenstrahldrucker, verwendet, da diese eine besonders hohe Flexibilität bei der Auswahl der Dekore und zudem den sequentiellen Druck verschiedener Dekore im laufenden Betrieb erlauben.

Gerade bei digitalen Druckvorrichtungen, insbesondere bei Tintenstrahldruckern, besteht jedoch das Problem, dass es durch verschiedene Einflüsse relativ leicht zu Druckfehlern kommen kann. Da diese selten sofort offensichtlich werden, arbeitet die Druckvorrichtung eine geraume Zeit weiter, ohne verwertbare Ware herzustellen. Dies führt unter Umständen zu einem großen Ausschuss bei der Dekorherstellung.

Aus der DE 10 2008 033 273 B4 ist ein Verfahren bekannt, bei dem randseitig am Druckpapier eine fortlaufende, parallel zum Dekor verlaufende Randstreifenmarkierung mit wenigstens einem längslaufenden Farbstreifen gedruckt wird und bei dem die Druckqualität in Abhängigkeit von der Randstreifenmarkierung überwacht wird.

Weiterhin ist aus der US 2004/0021724 A1 ein Tintenstrahldrucker bekannt, der die Durchführung eines Drucktests ermöglicht und durch den Druck von Testmustern insbesondere Abweichungen der Zuführgeschwindigkeit des Papiers oder Abweichungen in der Bewegung des Druckkopfes feststellen kann.

Ein digitaler Druckkontrollstreifen mit verschiedenen Testmustern ist aus dem Aufsatz The Ugra/Fogra digital control wedge and its application von Dr. K. Münger, Taga proceedings, 1991, Seite 48 - 62, bekannt.

Weitere Druckkontrollstreifen für den Offsetdruck und die Offsetkopie werden in dem Artikel Druckkontrollstreifen für den Offsetdruck und die Offsetkopie von W. Walenski, erschienen in Offsetdruck: Maschinen, Verfahrenstechniken, Produktionsmittel, Frankfurt, Polygraph Verlag, S.188 - 193, beschrieben.

Zudem offenbart die US 5,819,655 ein Verfahren zum Bedrucken von Etiketten für Haarfärbeprodukte mittels eines Rotationstiefdruckverfahrens.

Es hat sich jedoch gezeigt, dass die Druckqualität mit den aus dem Stand der Technik bekannten Verfahren nicht zufriedenstellend überwacht werden kann, da es bei der Herstellung von Dekorpapier weiterhin zu einer erheblichen Ausschussproduktion und zu Stillstandszeiten kommt.

Hiervon ausgehend liegt der vorliegenden Erfindung die Aufgabe zugrunde, ein Verfahren zur Herstellung von Dekorpapier zur Verfügung zu stellen, mit dem Dekorpapier in gleichbleibender Qualität und bei geringer Ausschussrate und geringen Stillstandszeiten hergestellt werden kann.

Diese Aufgabe wird bei dem eingangs genannten Verfahren erfindungsgemäß dadurch gelöst, dass die zwei Druckfarben in zumindest einem Teil des Testmusters übereinander gedruckt werden und dass ein Testmuster zur Überprüfung der maximalen vom Druckpapier aufzunehmenden Druckfarbmenge gedruckt wird, wobei in mindestens einem Teil des Testmusters mindestens zwei Druckfarben übereinander gedruckt werden. Bevorzugt werden insbesondere zwei Bunttöne der Druckfarben übereinander gedruckt.

Es wurde erkannt, dass die Druckqualität von Dekorpapieren mit Testmustern, die nicht nur Elemente aus separat gedruckten Druckfarben bzw. Tinten, sondern auch Elemente aufweisen, bei denen mindestens zwei Druckfarben übereinander gedruckt sind, besser überwacht werden kann. So haben sich für die Druckqualität des Dekorpapiers insbesondere solche Druckqualitätskriterien als wichtig herausgestellt, welche sich gerade mit derartigen Testmustern kontrollieren lassen. Mit diesen Testmustern können zudem wesentlich umfangreichere Informationen zum Betriebszustand der Druckvorrichtung und über die Einflüsse des eingesetzten Papiers und/oder der eingesetzten Druckfarben bzw. Tinten erhalten werden. Erst diese Gesamtheit der erhaltenen Informationen ermöglicht einerseits eine zufriedenstellende Überwachung der Dekorpapierherstellung und andererseits das zeitnahe Einleiten der richtigen Korrekturmaßnahmen bei einer Verschlechterung der Druckqualität, um Stillstände zu vermeiden oder zumindest zu reduzieren. Vorzugsweise sind die mindestens zwei Druckfarben in einer Fläche, d.h. nicht nur auf einer Kontur, übereinander gedruckt. Weiterhin bevorzugt sind im überwiegenden Teil des Testmusters oder im Wesentlichen im gesamten Testmuster mindestens zwei Druckfarben übereinander gedruckt.

Insbesondere wird unter dem Teil des Testmusters, in dem die zwei Druckfarben übereinander gedruckt werden, ein vorbestimmter Bereich verstanden. Ein zufälliges Überlappen aneinandergrenzender Bereiche verschiedener Druckfarben, beispielsweise durch eine Fehljustierung, wird bevorzugt nicht als vorbestimmter Bereich verstanden.

Unter Druckqualitätskriterien werden einzelne Kontrollgrößen verstanden, mit denen sich die Druckqualität des Dekorpapiers beurteilen lässt, wie zum Beispiel die relative Ausrichtung der verschiedenen Druckfarbaufträge zueinander, der Grad des Verlaufens der gedruckten Druckfarben oder die Graubalance. Es sind natürlich auch andere Druckqualitätskriterien denkbar. Die Druckqualität des Dekorpapiers kann daher vorliegend insbesondere als ein Satz aus vorgegebenen Druckqualitätskriterien verstanden werden. Die Druckqualitätskriterien sind bevorzugt als skalare Größen, wie zum Beispiel Prozentsätze oder Abstandsbeträge, darstellbar. Es sind aber auch Darstellungen als Vektoren, wie Verschiebungsvektoren, oder Zahlentupel denkbar. Unter einem Druckfehler wird insbesondere das Unterschreiten vorgegebener Werte einzelner, mehrerer oder sämtlicher Druckqualitätskriterien verstanden.

Das Bedrucken des Druckpapiers kann beispielsweise im (CMY)- oder im CMYK-Verfahren, d.h. mit den Druckfarben Cyan (C), Magenta (M), Gelb (Y) und ggf. Schwarz (K), erfolgen. Dazu weist die Druckvorrichtung jeweils mindestens ein Auftragsmittel, beispielsweise jeweils mindestens eine Düse, zum Auftrag der verschiedenen Druckfarben auf das Druckpapier auf. Natürlich können pro Druckfarbe auch mehrere Düsen, insbesondere auch je ein eigener Druckkopf mit einer Mehrzahl von Düsen, vorgesehen sein.

Das Druckpapier kann insbesondere auch mit einem anderen Farbsystem als dem reinen CMYK-Farbsystem bedruckt werden. Insbesondere können einzelne oder mehrere der folgenden Druckfarben bzw. Tinten verwendet werden: Photo Black, Matt Black, Light Black, Light Light Black, Cyan, Light Cyan, Magenta, Vivid Magenta, Vivid Light Magenta, Yellow. Auf diese Weise können die Druckfarben bzw. Tinten besser an die bestehenden Verhältnisse, d.h. insbesondere an das Dekor, die Druckvorrichtung, die Papiereigenschaften etc. angepasst werden. Weiterhin kann auf diese Weise ggf. auch der Druckfarben- bzw. Tintenverbrauch gesenkt werden. Grundsätzlich sind aber auch weitere oder andere Druckfarben bzw. Tinten einsetzbar.

Die Druckvorrichtung ist bevorzugt als Tintenstrahldrucker ausgebildet. Alternativ können aber auch andere digitale Druckvorrichtungen wie beispielsweise Farb-Laserdrucker verwendet werden. Unter den Auftragsmitteln werden die Mittel verstanden, mit denen jeweils eine Druckfarbe auf das Druckpapier aufgebracht werden kann. Beispiele für Auftragsmittel sind Düsen bzw. Druckköpfe, insbesondere bei Tintenstrahldruckern, oder Transferwalzen bzw. Transferbänder, insbesondere bei Laserdruckern.

Durch das Übereinanderdrucken zweier Druckfarben können durch subtraktive Farbmischung die sogenannten Sekundärfarben auf das Druckpapier aufgebracht werden. Bei dem Übereinanderdrucken von drei Druckfarben ergibt sich entsprechend eine Tertiärfarbe.

Unter dem Teststreifen wird ein randseitiger Streifen des Druckpapiers verstanden, welcher nicht mit Dekor bedruckt wird. Der Teststreifen ist bevorzugt fortlaufend, d.h. er erstreckt sich bevorzugt im Wesentlichen entlang der gesamten Länge des Dekorpapiers in Druckrichtung. Die Breite des Teststreifens ist bevorzugt so gering wie möglich, um Papierverlust zu minimieren und eine große mit dem Dekor bedruckbare Breite zu ermöglichen. Bevorzugt beträgt die Breite des Testtreifens 5 - 150 mm, insbesondere 10 - 100 mm, besonders bevorzugt 10 - 50 mm oder 10 - 30 mm, so dass nur eine geringe Breite des Druckpapiers für den Teststreifen vorgesehen werden muss. In den Teststreifen können wiederholt, vorzugsweise fortlaufend Testmuster gedruckt werden, beispielsweise auch verschiedenartige Testmuster. Die einzelnen Testmuster weisen bevorzugt in Druckrichtung vordefinierte, begrenzte Größen auf. Durch den Druck der Testmuster in einem randseitigen Teststreifen kann insbesondere ein Endlosdekor gedruckt werden, ohne dass es einer Unterbrechung des Dekordrucks durch im Druckbereich des Dekors angeordnete Testmuster bedarf.

In einer bevorzugten Ausführungsform des Verfahrens werden mehrere Testmuster, insbesondere drei oder mindestens drei, vorzugsweise fünf oder mindestens fünf Testmuster, gedruckt. Vorzugsweise unterscheiden sich die Testmuster paarweise voneinander. Auf diese Weise kann die Dekorqualität besser und insbesondere hinsichtlich einer größeren Zahl von Dekorqualitätskriterien kontrolliert werden.

In einer weiteren bevorzugten Ausführungsform des Verfahrens wird das Testmuster optisch, vorzugsweise mittels eines Scanners oder einer Kamera, erfasst und die Druckqualität wird automatisch überwacht. Auf diese Weise kann die Qualität des Drucks kontinuierlich automatisch überwacht werden, so dass eine Verschlechterung der Druckqualität ohne lange Verzögerung erfasst und beispielsweise automatisch eine Meldung ausgegeben werden kann. Hierdurch lassen sich die Ausschussmengen reduzieren.

Alternativ oder zusätzlich kann das Testmuster auch durch eine Person visuell kontrolliert werden. Beispielsweise kann das Testmuster durch einen Scanner oder eine Kamera automatisch oder auf Anforderung erfasst und auf einem Bildschirm angezeigt oder über eine Druckvorrichtung ausgegeben werden, so dass es durch eine Person visuell kontrolliert werden kann.

Stillstandszeiten können bei der Herstellung von Dekorpapier in einer weiteren bevorzugten Ausführungsform des Verfahrens dadurch reduziert werden, dass beim Unterschreiten einer vorgegebenen Druckqualität automatisch ein Korrekturprozess der Druckvorrichtung initiiert wird.

Auf diese Weise ist es möglich, einer Verschlechterung der Druckqualität des Dekors unmittelbar und automatisch entgegenzuwirken, so dass ein manuelles Eingreifen nicht erforderlich ist und die Stillstandszeiten der Druckvorrichtung verringert werden können.

Weiterhin können Verschlechterungen der Druckqualität bevorzugt bereits im Vorfeld erkannt werden, indem die vorgegebene Druckqualität, bei deren Unterschreitung eine Meldung ausgegeben und/oder ein Korrekturprozess durchgeführt wird, so gewählt wird, dass auch ein Unterschreiten dieser Druckqualität um einen bestimmten Wert noch zu akzeptablen Druckergebnissen führt. Die vorgegebene Druckqualität wird also oberhalb der geringsten noch akzeptablen Druckqualität gewählt. Nach einem geringfügigen Unterschreiten dieser vorgegebenen Druckqualität kann dann beispielsweise ein Korrekturprozess durchgeführt werden, so dass das Unterschreiten der geringsten noch akzeptablen Druckqualität vermieden wird. Dadurch kann ein andernfalls notwendiger Abbruch des derzeitigen Drucks vermieden bzw. die Ausschussproduktion verringert werden.

In den nachfolgenden Ausführungsformen sollen verschiedene Druckfehler sowie zugehörige Druckqualitätskriterien und Korrekturprozesse näher erläutert werden.

Einen typischen Druckfehler beim Druck des Dekors stellen die sogenannten "Geisterbilder" dar. Hierbei erscheint das Dekorbild mehrfach in verschiedenen Farben versetzt zueinander gedruckt zu sein, so dass die Konturen des Dekorbildes einen farbigen Schein aufweisen. Dieser Fehler wird durch die Fehlausrichtung zweier oder mehrerer Auftragsmittel verschiedener Druckfarben, z.B. von Düsen oder Druckköpfen, hervorgerufen. Dadurch werden die einzelnen Farbanteile des Dekorbildes zueinander versetzt auf das Dekorpapier aufgedruckt. Das Entstehen solcher Geisterbilder kann in einer weiteren Ausführungsform des Verfahren nun dadurch verhindert werden, dass ein Testmuster zur Überprüfung der relativen Ausrichtung der beiden Auftragsmittel, insbesondere der beiden Düsen, zueinander gedruckt wird und dass die relative Ausrichtung der beiden Auftragsmittel zueinander anhand des Testmusters automatisch ausgewertet und optional automatisch korrigiert wird.

Die Versetzung zwischen zwei Auftragsmitteln, d.h. zwischen zwei Düsen oder auch zwei Druckköpfen, kann beispielsweise durch ein Testmuster überprüft werden, bei dem vordefinierte geometrische Figuren mit den verschiedenen Druckfarben übereinander gedruckt werden. Damit kann insbesondere auch der Vektor bestimmt werden, um den beispielsweise eine Düse gegenüber ihrer optimalen Ausrichtung zu einer zweiten Düse verschoben ist. Der Vektor oder der Betrag des Vektors kann dann als Druckqualitätskriterium angesehen werden. Weiterhin kann dieser Vektor auch zur Korrektur des Ausrichtungsfehlers verwendet werden, indem das entsprechende Auftragsmittel, z.B. die entsprechende Düse, um das Negative dieses Vektors versetzt wird.

Vorzugsweise wird aus dem optisch erfassten Testmuster ein von der relativen Ausrichtung abhängiges Signal erzeugt und dann Korrekturmitteln für die Düsenausrichtung zugeführt. Auf diese Weise können der Ausrichtungsfehler der Auftragsmittel automatisch korrigiert und damit das Auftreten von Geisterbildern reduziert werden.

Die maximale Menge an Druckfarbe, die das verwendete Druckpapier aufnehmen kann, stellt ein weiteres für die Herstellung von Dekorpapier wichtiges Druckqualitätskriterium dar und hängt mit dem verwendeten Druckpapier und den verwendeten Druckfarben zusammen. Wird diese maximale Druckfarbmenge beim Auftragen der Druckfarben überschritten, kommt es zum sogenannten "Ausbluten" der Farben, d.h. die Druckfarbe fließt in eigentlich unbedruckte Bereiche des Druckpapiers. Dieses Druckqualitätskriterium wird erfindungsgemäß dadurch kontrolliert, dass ein Testmuster zur Überprüfung der maximalen vom Druckpapier aufzunehmenden Druckfarbmenge gedruckt wird, wobei in mindestens einem Teil des Testmusters mindestens zwei Druckfarben übereinander gedruckt werden, und dass optional die Auftragsmengen der Druckfarbe automatisch angepasst werden.

Es wurde erkannt, dass das zuvor beschriebene Ausbluten der Druckfarbe insbesondere beim Übereinanderdrucken mehrerer Druckfarben auftritt und die Druckqualität des Dekors beeinträchtigt. Ein Testmuster zur Überprüfung der maximalen vom Druckpapier aufzunehmenden Druckfarbmenge weist bevorzugt eine Folge von Bereichen mit unterschiedlichen Flächenbedeckungen der Druckfarben, insbesondere bei einer Sekundär- oder Tertiärfarbe, auf.

Unter der Flächenbedeckung wird der prozentuale Anteil der mit Druckfarbe bedruckten Fläche an der Gesamtfläche eines Bereichs vorgegebener Größe verstanden.

Die Bereiche mit unterschiedlichen Flächenbedeckungen können insbesondere auch ineinander übergehen, d.h. das Testmuster kann beispielsweise ein Element mit sich in eine Richtung kontinuierlich erhöhenden Flächenbedeckung aufweisen. Zeigt die Folge beispielsweise eine Reihe von Bereichen mit steigender Flächenbedeckung, so kann diejenige Flächenbedeckung ermittelt werden, bei der es zum Ausbluten, d.h. zum Verlaufen der Druckfarben in nicht bedruckte Teilbereiche kommt. Der prozentuale Flächenbedeckungswert kann dann als Druckqualitätskriterium angesehen werden.

Erfolgt das Ausbluten gegenüber einem vorgegeben Wert bei einer zu kleinen oder auch zu großen Flächenbedeckung, so können die jeweiligen Auftragsmengen der verschiedenen Druckfarben zur Korrektur entsprechend angepasst werden. Beispielsweise können die Auftragsmengen bei einem vorzeitigen Ausbluten reduziert werden.

Als ein weiteres wichtiges Druckqualitätskriterium für die Herstellung von Dekorpapier hat sich die Graubalance herausgestellt. Unter der Graubalance werden die Auftragsverhältnisse der Bunttöne der Druckfarben zueinander, also beispielsweise von Cyan, Magenta und Gelb beim CYMK-Verfahren, zur Darstellung von Grautönen bzw. Schwarz verstanden. Ein maximaler Überdruck der Farben Cyan, Magenta und Gelb soll beispielsweise ein tiefes Schwarz ergeben. Bei einer fehlerhaften Graubalance führen die Anteile der jeweiligen Druckfarben jedoch zu einer Verfärbung des Grautons, beispielsweise zu einem Braunton. Dieser Effekt zeigt sich weiterhin auch bei qualitativ minderwertigen Tinten.

In einer weiteren bevorzugten Ausführungsform des Verfahrens wird daher ein Testmuster zur Überprüfung der Graubalance der Bunttöne der Druckfarben gedruckt und die Graubalance wird optional automatisch korrigiert. Auf diese Weise können die Graubalance oder auch die Tintenqualität überprüft werden.

Ein Testmuster zur Überprüfung der Graubalance kann beispielsweise ein mit den Bunttönen der Druckfarben gedrucktes Graufeld und optional ein mit einer schwarzen Druckfarbe gedrucktes, entsprechendes Referenzfeld mit dem entsprechenden Grauton bzw. mit der Farbe Schwarz aufweisen. Durch einen Farbvergleich zwischen den beiden Feldern kann dann die Graubalance überprüft und der entsprechend Druckfarbenanteil bei einer Farbverschiebung des Tons des Graufelds korrigiert werden.

Die Druckauflösung kann in einer weiteren Ausführungsform des Verfahrens dadurch überprüft werden, dass ein Testmuster zur Überprüfung der Druckauflösung gedruckt wird, wobei das Testmuster mindestens ein Objekt, vorzugsweise eine Reihe gleichartiger Objekte von abnehmender Größe, umfasst, wobei das einzelne Objekt jeweils mindestens einen von einer vorzugsweise sternförmigen Kontur umgebenen unbedruckten Bereich aufweist und wobei der unbedruckte Bereich in einem ersten Teilbereich eine geringere Breite aufweist als in einem zweiten Teilbereich, wobei die Breite des unbedruckten Bereichs sich zwischen dem ersten und dem zweiten Teilbereich vorzugsweise unstetig oder/oder nicht differenzierbar vergrößert. Die Kontur kann mit einer Druckfarbe oder mit mehreren Druckfarben übereinander gedruckt werden. Insbesondere stellt diese Ausführungsform eine von dem Übereinanderdrucken zweier Druckfarben unabhängige, eigenständige Erfindung dar.

Unter der Breite des unbedruckten Bereichs wird der jeweilige Abstand zwischen den Bereich zu zwei Seiten begrenzenden Konturteilen verstanden. Die absolute Breite nimmt mit geringer werdender Größe der Objekte immer weiter ab. Eine Auflösungsgrenze wird dann erreicht, wenn ein Teilbereich des unbedruckten Bereiches zwischen den begrenzenden Konturteilen nicht mehr sichtbar ist. Die Breite des unbedruckten Bereichs vergrößert sich zwischen den beiden Teilbereichen vorzugsweise nicht stetig und/oder nicht differenzierbar, d.h. sprungartig oder mit einem Knick. Auf diese Weise ist der Übergang zwischen den beiden Teilbereichen ohne weiteres zu erkennen und erlaubt eine einfachere Beurteilung, wann die einzelnen Teilbereiche nicht mehr sichtbar sind.

Es wurde erkannt, dass mit dem zuvor beschriebenen Testmuster gleichzeitig zwei verschiedene Auflösungsgrenzen untersucht werden können. So verschwindet bei abnehmender Druckauflösung zunächst der schmalere erste unbedruckte Teilbereich zwischen den begrenzenden Konturteilen und zeigt damit das Erreichen einer ersten Auflösungsgrenze an. Erst bei weiter abnehmender Druckauflösung verschwindet auch der breitere zweite unbedruckte Teilbereich zwischen den begrenzenden Konturteilen und zeigt das Erreichen der zweiten Auflösungsgrenze an.

Durch das Breitenverhältnis der beiden Teilbereiche kann der Abstand zwischen den beiden Auflösungsgrenzen eingestellt werden. Beispielsweise kann das Breitenverhältnis so gewählt werden, dass die Druckqualität beim Unterschreiten der ersten Auflösungsgrenze für eine Verwendung des gedruckten Dekors noch ausreichend ist und erst beim Unterschreiten der zweiten Auflösungsgrenze eine Ausschussproduktion anzeigt. Damit kann nach Erreichen der ersten Auflösungsgrenze ein Korrekturprozess initiiert werden, bevor die Druckauflösung in einen kritischen Bereich gelangt.

Bei einer sternförmigen Kontur kann der unbedruckte Bereich der Sternspitzen als erster, schmaler Teilbereich und der mittlere, kreisförmige Bereich als zweiter, breiterer Teilbereich angesehen werden.

Bei dem Verfahren können insbesondere verschiedene Testmuster gedruckt werden, beispielsweise um die Ausrichtung der Auftragsmittel der Druckvorrichtung, d.h. insbesondere die Druckkopfausrichtung bzw. die Düsenausrichtung, die Funktion der Düsen, das Überdruckverhalten der Druckfarben und des Papiers, das Ausbluten, die Graubalance, die Druckschärfe und/oder die Druckauflösung zu kontrollieren und ggf. zu korrigieren. Natürlich sind auch weitere Druckqualitätskriterien denkbar.

Insbesondere können verschiedenartige Testmuster in einer fest vorgegebenen oder in einer dynamisch angepassten Reihenfolge nacheinander gedruckt werden. Es ist auch denkbar, mehrere Testmuster nebeneinander in den Teststreifen zu drucken. Bevorzugt werden mehrere verschiedene, insbesondere mindestens drei, bevorzugt mindestens fünf verschiedenartige Testmuster in den Teststreifen gedruckt.

Das Dekor weist bevorzugt eine Mehrzahl von Dekorabschnitten auf, wobei das Druckpapier bevorzugt nach dem Bedrucken entsprechend der einzelnen Dekorabschnitte abgelängt wird. Ein Dekorabschnitt des Dekorpapiers entspricht damit insbesondere dem Dekorpapier für ein Bauelement, beispielsweise für ein Paneel oder ein Möbelelement.

Zum Druckbeginn eines jeden Dekorabschnitts kann beispielsweise ein bestimmtes Testmuster oder eine bestimmte Folge von Testmustern gedruckt werden. Die Testmuster können alternativ aber auch unabhängig vom Beginn oder dem Ende eines Dekorabschnitts bzw. unhabhängig vom zu druckenden Dekor in den Teststreifen gedruckt werden.

Die Testmuster sind bevorzugt so ausgestaltet, dass mit ihnen ein oder mehrere Druckqualitätskriterien überprüft werden können. Testmuster für die Überprüfung von Druckqualitätskriterien, bei denen häufiger Fehler auftreten oder zu erwarten sind, können bevorzugt entsprechend häufiger gedruckt werden. Hierdurch können häufig auftretende Druckfehler schneller erkannt werden.

So wird in einer weiteren bevorzugten Ausführungsform des Verfahrens eine optimierte Überprüfung der Druckqualität dadurch erreicht, dass eine Mehrzahl verschiedener Testmuster zur Überwachung verschiedener Druckqualitätskriterien gedruckt wird, wobei die Reihenfolge und/oder die Druckhäufigkeit der einzelnen Testmuster automatisch in Abhängigkeit von den jeweils überwachten Druckqualitätskriterien angepasst wird. Diese Ausführungsform ist insbesondere unabhängig von der Verwendung von Testmustern mit übereinander gedruckten Druckfarben und stellt eine eigenständige Erfindung dar.

Ergibt sich bei der automatischen Überwachung der Testmuster beispielsweise, dass es häufiger zu einer Abweichung der relativen Ausrichtung der Druckköpfe kommt als zu einer Abweichung der Graubalance, so kann die Häufigkeit des Auftretens von Testmustern zur Überwachung der Druckkopfausrichtung gegenüber den Testmustern zur Überprüfung der Graubalance entsprechend erhöht werden. Insbesondere wird bei dem Verfahren bevorzugt die Häufigkeit der verschiedenen Fehler bzw. der Abweichungen in den einzelnen Druckqualitätskriterien automatisch statistisch erfasst und die Reihenfolge und/oder Häufigkeit der Testmuster entsprechend angepasst.

In einer weiteren bevorzugten Ausführungsform des Verfahrens wird das Drucken des Dekors nach Durchführung des Korrekturprozesses automatisch fortgesetzt. Auf diese Weise können die Stillstandszeiten beim Drucken des Dekorpapiers weiter reduziert werden, da der Betrieb nach der Behebung der Qualitätseinbuße automatisch wieder aufgenommen wird, ohne dass ein Eingreifen von außen erforderlich ist.

Der Korrekturprozess kann beispielsweise unmittelbar nach dem Feststellen einer Druckqualitätsverschlechterung, d.h. beispielsweise eines Unterschreitens vorgegebener Werte für die überwachten Druckqualitätskriterien, erfolgen, so dass der zu dieser Zeit laufende Druck unmittelbar angehalten, der Korrekturprozess durchgeführt und der Druck optional im Anschluss fortgesetzt werden.

In einer weiteren Ausführungsform wird als Dekor eine Mehrzahl von Dekorabschnitten mit vorgegebenen Dekorabschnittlängen gedruckt und ein durch einen Korrekturprozess unterbrochener Druck eines der Dekorabschnitte unabhängig vom Ergebnis des Korrekturprozesses fortgesetzt, bis der Dekorabschnitt vollständig gedruckt ist. Es hat sich gezeigt, dass selbst bei einem fehlgeschlagenen Korrekturprozess die Druckqualität für den zu dieser Zeit gedruckten Dekorabschnitt noch ausreichen hoch sein kann, so dass dieser Dekorabschnitt weiterverarbeitet werden kann und nicht als Ausschuss ausgeschieden werden muss. Dies ist insbesondere dann der Fall, wenn die vorgegebene Druckqualität oberhalb der geringsten noch akzeptablen Druckqualität gewählt wird. Bei einem fehlgeschlagenen Korrekturprozess kann der Druck des Dekors nach Abschluss des aktuellen Dekorabschnitts angehalten werden, ein Korrekturprozess initiiert werden und/oder eine entsprechende Warnmeldung ausgegeben werden.

Die Weiterverarbeitung des Dekorpapiers wird in einer weiteren Ausführungsform des Verfahrens dadurch erleichtert, dass als Dekor eine Mehrzahl von Dekorabschnitten derselben vorgegebenen Dekorabschnittlänge gedruckt wird, dass nach dem Druck eines ersten Dekorabschnitts ein Korrekturprozess durchgeführt wird, dass nach dem Korrekturprozess ein zweiter Dekorabschnitt gedruckt wird und dass das Ende des ersten Dekorabschnitts vom Anfang des zweiten Dekorabschnitts auf dem Dekorpapier um ein ganzzahliges Vielfaches, insbesondere um das Einfache der vorgegebenen Dekorabschnittlänge beabstandet ist.

Auf diese Weise kann die vorgegebene Dekorabschnittlänge eingehalten werden, so dass beim Ablängen der bedruckten Papierbahn immer gleichlange Abschnitte gebildet werden, wodurch deren weitere Bearbeitung wesentlich erleichtert wird. Etwaiger Ausschuss zwischen dem Druck des ersten und des zweiten Dekorabschnitts kann damit auf einfache Weise ausgesondert werden. Das Aussondern kann beispielsweise erforderlich sein, wenn die Druckqualität eines nach dem ersten Dekorabschnitt begonnenen Dekorabschnittdrucks zu sehr abgefallen ist und abgebrochen werden muss oder wenn der Korrekturprozess ein Drucken auf dem Druckpapier, beispielsweise im Teststreifen oder auch außerhalb des Teststreifens, umfasst, so dass der entsprechende Bereich des Druckpapiers nicht mehr für einen Dekordruck verwendet werden kann.

Alternativ kann das Ende des ersten Dekorabschnitts auf dem Dekorpapier um einen ganzzahligen Bruchteil, d.h. um 1/N-tel, der vorgegebenen Dekorabschnittslänge beabstandet sein. N ist hierbei eine natürliche Zahl. Auf diese Weise ist ebenfalls eine einfache Ablängung möglich.

Weiterhin kann alternativ zwischen dem ersten und dem zweiten Dekorabschnitt auch ein Abstand gewählt werden, dessen Länge zumindest der Länge des kleinstmöglich ablängbaren Papierbahnabschnittes oder einem Vielfachen hiervon entspricht, so dass entsprechend kurze Abschnitte der Papierbahn automatisiert aus dem Prozess geschleust und ausgeschieden werden können. Dadurch kann die Ausschussmenge noch weiter reduziert werden.

Zur Erleichterung der Weiterverarbeitung des Dekorpapiers können weiterhin Schnittmarken gedruckt werden, welche die Schnittposition für das Ablängen der Papierbahn anzeigen. Als Schnittmarke kann bevorzugt auch ein Firmenlogo verwendet werden. Auf diese Weise kann das Dekorpapier ohne weiteren Aufwand mit einem Herstellerhinweis versehen werden.

Die zuvor genannte Aufgabe wird weiterhin auch bei einem Dekorpapier mit einem bedruckten Druckpapier, wobei das Druckpapier einen vorzugsweise durchgehenden randseitigen Teststreifen aufweist und wobei innerhalb des Teststreifens mindestes ein gedrucktes Testmuster angeordnet ist, erfindungsgemäß dadurch gelöst, dass das Testmuster mindestens einen Bereich aufweist, in dem mindestens zwei Druckfarben übereinander gedruckt sind und dass innerhalb des Teststreifens ein Testmuster zur Überprüfung der maximalen vom Druckpapier aufzunehmenden Druckfarbmenge angeordnet ist, wobei das Testmuster eine Folge von Bereichen mit unterschiedlichen Flächenbedeckungen, insbesondere einer Sekundär- oder Tertiärfarbe, aufweist. Vorzugsweise ist das Dekorpapier mit einem zuvor beschriebenen erfindungsgemäßen Verfahren hergestellt.

Bei dem Dekorpapier handelt es sich im Wesentlichen um bedrucktes Druckpapier. Es können jedoch auch noch weitere unter oder über dem Druckpapier vorgesehene Schichten vorgesehen sein.

Hinsichtlich der Vorteile des Dekorpapiers wird insbesondere auf die zuvor im Zusammenhang mit dem Verfahren beschriebenen Vorteile verwiesen.

Das Dekorpapier kann weiterhin auch zu den zuvor im Zusammenhang mit dem Verfahren beschriebenen Merkmalen entsprechende Merkmale aufweisen. Hierbei wird auch auf die zuvor beschriebenen Vorteile verwiesen. Insbesondere kann das Dekorpapier auch durch die Merkmale eines oder mehrerer der vom Patentanspruch 1 abhängigen Patentansprüche oder durch diesen Merkmalen entsprechende Produktmerkmale gekennzeichnet sein. So kann das Dekorpapier beispielsweise mehrere Testmuster, insbesondere mehrere verschiedenartige Testmuster, beispielsweise mindestens drei, bevorzugt mindestens fünf Testmuster aufweisen.

In einer ersten Ausführungsform des Dekorpapiers sind innerhalb des Teststreifens Testmuster zur Überprüfung der Ausrichtung der Auftragsmittel, insbesondere der Druckkopf- bzw. Düsenausrichtung, der Düsenfunktion, der maximalen vom Druckpapier aufzunehmenden Druckfarbmenge, der Graubalance, der Druckschärfe und/oder der Druckauflösung angeordnet. Auf diese Weise kann die Druckqualität des Dekorpapiers umfassend überprüft werden, so dass eine gleichbleibend hohe Qualität des Dekorpapiers sichergestellt werden kann.

Eine Überprüfung der maximalen vom Druckpapier aufzunehmenden Druckfarbmenge wird bei dem Druckpapier erfindungsgemäß dadurch überprüft, dass innerhalb des Teststreifens ein Testmuster zur Überprüfung der maximalen vom Druckpapier aufzunehmenden Druckfarbmenge angeordnet ist, wobei das Testmuster eine Folge von Bereichen mit unterschiedlichen Flächenbedeckungen, insbesondere einer Sekundär- oder Tertiärfarbe, aufweist.

Weiterhin kann in einer weiteren Ausführungsform des Dekorpapiers die Graubalance dadurch überprüft werden, da innerhalb des Teststreifens ein Testmuster zur Überprüfung der Graubalance angeordnet ist, wobei das Testmuster ein mit den Bunttönen der Druckfarben bedrucktes Graufeld und optional ein mit einer schwarzen Druckfarbe bedrucktes entsprechendes Referenzfeld aufweist.

Die Druckauflösung kann in einer weiteren Ausführungsform des Dekorpapiers dadurch überprüft werden, dass innerhalb des Teststreifens ein Testmuster zur Überprüfung der Druckauflösung angeordnet ist, wobei das Testmuster eine Reihe gleichartiger Objekte von abnehmender Größe umfasst, wobei die einzelnen Objekte jeweils mindestens einen von einer vorzugsweise sternförmigen Kontur umgebenen unbedruckten Bereich aufweisen und wobei der unbedruckte Bereich in einem ersten Teilbereich eine geringere Breite aufweist als in einem zweiten Teilbereich, wobei die Breite des unbedruckten Bereichs sich zwischen dem ersten und dem zweiten Teilbereich vorzugsweise unstetig oder nicht differenzierbar vergrößert. Weitere Vorteile und Eigenschaften der vorliegenden Erfindung ergeben sich aus der nachfolgenden Beschreibung mehrerer Ausführungsbeispiele, wobei auf die beigefügte Zeichnung Bezug genommen wird.

In der Zeichnung zeigen
- Fig. 1: ein erstes Ausführungsbeispiel des erfindungsgemäßen Verfahrens sowie ein erstes Ausführungsbeispiel des erfindungsgemäßen Dekorpapiers,
- Fig. 2: vier Druckköpfe einer Druckvorrichtung,
- Fig. 3: ein mit den in Fig. 2 dargestellten Druckköpfen gedrucktes Druckbild,
- Fig. 4: ein Testmuster zur Überprüfung der Düsenanordnung bzw. Druckkopfanordnung,
- Fig. 5: ein Testmuster zur Überprüfung des Ausblutens der Druckfarben,
- Fig. 6: ein Testmuster zur Überprüfung des Ineinanderfließens und Wegbrechens der Druckfarben,
- Fig. 7: ein Testmuster zur Überprüfung der Graubalance,
- Fig. 8: ein Testmuster zur Kontrolle der Druckschärfe und
- Fig. 9: ein Testmuster zur relativen Ausrichtung der Düsen bzw. Druckköpfe zueinander.

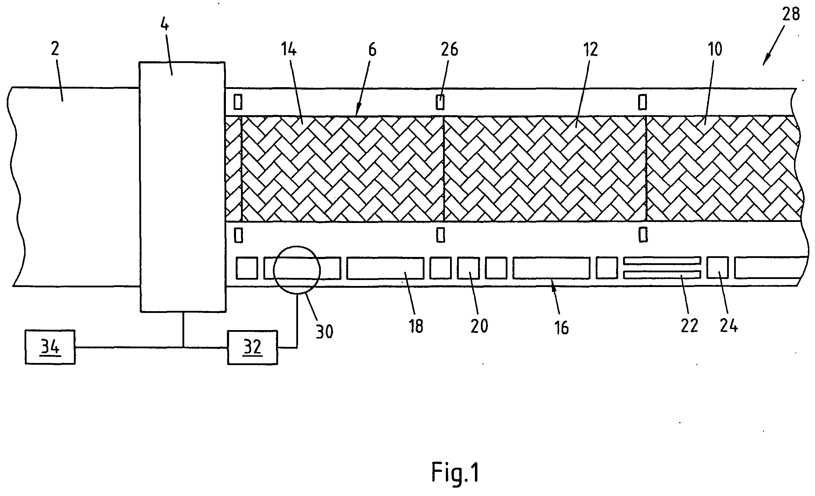

Fig. 1 zeigt ein erstes Ausführungsbeispiel eines erfindungsgemäßen Verfahrens sowie ein erstes Ausführungsbeispiel eines erfindungsgemäßen Dekorpapiers. Ein Druckpapier 2 wird bereitgestellt, beispielsweise durch Abrollen von einer Rolle (nicht gezeigt), und einer Druckvorrichtung 4 zugeführt. Bei der Druckvorrichtung handelt es sich beispielsweise um einen Tintenstrahldrucker zum Druck im CMYK-Verfahren. Das Druckpapier 2 wird mittels der Druckvorrichtung 4 mit einem Dekor 6 bedruckt, welches beispielsweise mehrere Dekorabschnitte 10, 12, 14 vorgegebener Länge aufweisen kann. Die Dekorabschnitte können wie in Fig. 1 dargestellt jeweils das gleiche oder auch verschiedene Dekorbilder aufweisen. In einem randseitigen Teststreifen 16 des Druckpapiers 2 werden verschiedene Testmuster 18, 20, 22, 24 gedruckt, mit denen jeweils verschiedene Druckqualitätskriterien des Dekordrucks überprüft werden können. Die verschiedenen Testmuster können nacheinander in Druckrichtung, aber - wie beim Testmuster 20 gezeigt - zum Teil auch nebeneinander angeordnet werden. Weiterhin werden bevorzugt an den Übergängen zwischen den einzelnen Dekorabschnitten 10, 12, 14 Schnittmarken 26 gedruckt, mit denen die Schnittkanten für ein späteres Ablängen des Druckpapiers 2 gekennzeichnet werden. Das fertig bedruckte Druckpapier 2 wird als Dekorpapier 28 bezeichnet.

Mindestens ein Testmuster 18, 20, 22, 24 weist einen Bereich auf, in dem mindestens zwei Druckfarben übereinander gedruckt sind. Es wurde erkannt, dass auf diese Weise die für die Druckqualität des Dekors 6 besonders relevanten Druckqualitätskriterien und die damit verbundenen möglichen Druckfehler überwacht werden können. Die Überwachung kann beispielsweise visuell durch eine Person erfolgen. Alternativ oder zusätzlich können die Testmuster 18, 20, 22, 24 optisch, beispielsweise mittels einer Kamera 30 oder eines Scanners erfasst werden. Das von der Kamera 30 oder einem Scanner aufgenommene Bild des Testmusters wird zur Analyse vorzugsweise an eine elektronische Datenverarbeitungseinheit 32 weitergeleitet, mit der anhand der jeweiligen Testmuster die verschiedenen Druckqualitätskriterien überwacht werden können. Insbesondere kann die elektronische Datenverarbeitungsanlage 32 ein von dem jeweiligen Testmuster abhängiges Signal erzeugen, welches dann zur Ansteuerung der Druckvorrichtung 4 und/oder zur Ausgabe einer entsprechenden Meldung an der Anzeige 34 verwendet werden kann. Mit diesem Signal kann insbesondere auch ein Korrekturprozess initiiert werden. Weiterhin kann das von der Kamera 30 erfasste Testmuster auch auf der Anzeige 34 zur visuellen Kontrolle durch eine Person angezeigt werden.

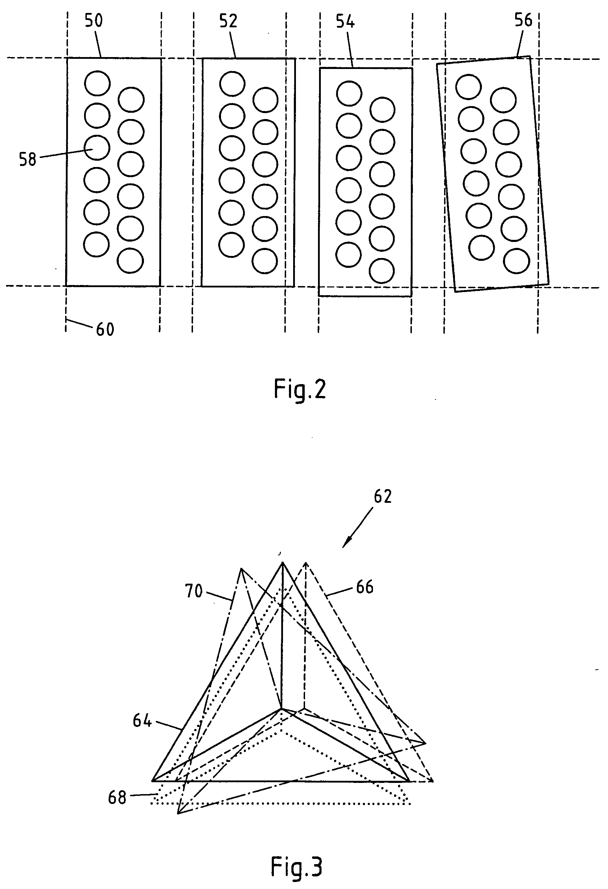

In den Figs. 2 und 3 ist als Beispiel für einen Druckfehler sowie ein Druckqualitätskriterium das Entstehen von Geisterbildern schematisch dargestellt.

Fig. 2 zeigt die relative Ausrichtung von vier Druckköpfen 50, 52, 54, 56 eines Tintenstrahldruckers zueinander. Jeder der Druckköpfe weist eine Vielzahl von Düsen 58 auf, durch welche die Druckfarbe, d.h. vorliegend die Tinte, auf das Druckpapier aufgebracht werden kann. Zum Erreichen einer optimalen Druckqualität sollten die Druckköpfe entsprechend dem dargestellten Raster 60 angeordnet sein. Es kann jedoch durch verschiedene Einflüsse beispielsweise zu einer Verschiebung - wie beispielsweise für die Druckköpfe 52 und 54 dargestellt - oder auch zu einer Verdrehung - wie beispielsweise für den Druckkopf 56 dargestellt - und somit zu einer Fehlausrichtung der Druckköpfe kommen. Dadurch können beim Drucken Geisterbilder entstehen, wie nachfolgend anhand von Fig. 3 verdeutlicht wird.

Für den Druck des in Fig. 3 dargestellten Druckbildes 62 in einer vorgegebenen Farbe werden mit den Druckköpfen 50, 52, 54 und 56 die jeweiligen Teilbilder 64, 66, 68, 70 in den entsprechenden Druckfarben Schwarz, Cyan, Magenta und Gelb gedruckt. Für die beste Druckqualität sollten die Druckköpfe genau zueinander ausgerichtet sein, so dass die Teilbilder des jeweiligen Objekts genau aufeinander gedruckt werden. Aufgrund der Fehlausrichtung der Druckköpfe in Fig. 2 liegen die Teilbilder in Fig. 3 jedoch nicht genau übereinander. Die Teilbilder 66 und 68 der Druckköpfe 52 und 54 sind gegenüber dem Teilbild 64 des Druckkopfs 50 verschoben. Das Teilbild 70 des Druckkopfs 56 ist gegenüber dem Teilbild 64 verdreht. Dadurch erscheint das Druckbild 62 mit farbigen Mehrfachkonturen. Diese werden als "Geisterbilder" bezeichnet.

Nachfolgend wird durch in den Figuren dargestellten Pfeil 78 jeweils die Druckrichtung angezeigt.

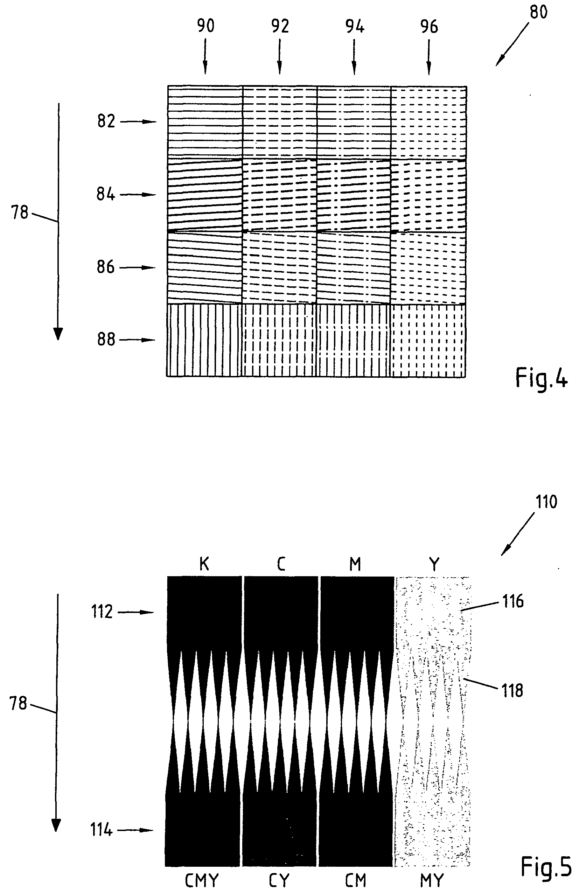

Fig. 4 zeigt ein Testmuster zur Überprüfung der Düsen- bzw. der Druckkopfausrichtung. Das Testmuster 80 besteht aus einer Anordnung von 4 x 4 Feldern von vorzugsweise je 10 mm x 10 mm Größe. Die Felder sind in vier Reihen 82, 84, 86, 88 und vier Spalten 90, 92, 94 und 96 angeordnet. Die vier Felder der Reihe 82 weisen horizontal, d.h. quer zur Druckrichtung, ausgerichtete Linien in den vier Druckfarben Schwarz, Cyan, Magenta und Gelb des CMYK-Verfahrens auf. Mit diesen Feldern kann kontrolliert werden, ob die den einzelnen Farben zugeordneten Druckköpfe in der Vorschubrichtung des Druckpapiers gleichmäßig ausgerichtet und eingestellt sind.

Die vier Felder der zweiten Reihe 84 weisen Linien in einem Winkel von 5° zur Horizontalen auf. Die Linien ergeben sich durch das Überdrucken von mindestens zwei Druckfarben. Damit können mit diesen Feldern nicht nur die Lage der Düsen in Bezug auf die Papierrichtung und/oder die Bewegungsrichtung des Druckkopfes, sondern auch die Lagen der Düsen zueinander bzw. die Einstellung der Druckköpfe zueinander kontrolliert werden, um Geisterbilder zu vermeiden. Im Feld der ersten Spalte 90 sind die Druckfarben Schwarz, Cyan, Magenta und Gelb mit jeweils 100% Farbanteil zu schwarzen Linien übereinander gedruckt. Im Feld der zweiten Spalte 92 sind 100% Cyan und 100% Magenta zu violetten Linien übereinander gedruckt. Im Feld der Spalte 94 sind 100% Magenta und 100% Gelb zu roten Linien übereinander gedruckt. Im Feld der vierten Spalte 96 sind 100% Gelb mit 100% Cyan zu grünen Linien übereinander gedruckt. Sind die verschiedenen Druckköpfe nicht genau zueinander ausgerichtet, so ändert sich die Farbe der Linien in den einzelnen Feldern. Ist beispielsweise der Druckkopf für Magenta fehlausgerichtet gegenüber dem Druckkopf für Gelb, so ergeben sich im Feld der zweiten Spalte 92 keine roten, sondern magentafarbene und gelbe Linien.

In den Feldern der dritten Reihe 86 weisen die Linien einen Winkel von -5° zur Horizontalen auf. Die Felder der einzelnen Spalten zeigen von links nach rechts jeweils die Farben Schwarz, Cyan, Magenta und Gelb. Mit diesen Feldern kann die eingestellte Druckerauflösung kontrolliert werden. So zeigen die Linien in den Feldern bei zu niedrig eingestellter Druckerauflösung den sogenannten "Sägezahneffekt", d.h. eine stufige Liniendarstellung. In der vierten Reihe 88 weisen die Felder vertikal, d.h. in Druckrichtung, ausgerichtete Linien auf, und zwar von links nach rechts in Schwarz, Cyan, Magenta und Gelb. Mit diesen Feldern kann die seitliche Ausrichtung, relativ zur Druckrichtung bzw. Druckpapiertransportrichtung, der Druckköpfe kontrolliert werden.

Die Linienstärke der Linien in den Feldern des Testmusters 80 beträgt vorzugsweise 0,2 bis 0,8 Pt, insbesondere 0,5 Pt.

Fig. 5 zeigt ein erfindungsgemäßes Testmuster 110, mit dem das Ausbluten der Druckfarben kontrolliert werden kann. In der ersten Reihe 112 sind nebeneinander von links nach rechts die Druckfarben Schwarz, Cyan, Magenta und Gelb gedruckt. In der zweiten Reihe 114 sind durch Übereinanderdrucken mehrerer Druckfarben von links nach rechts die Farben Schwarz aus je 100% Cyan, Magenta und Gelb, die Farbe Grün aus je 100% Cyan und Gelb, die Farbe Violett aus je 100% Cyan und Magenta und die Farbe Rot aus je 100% Magenta und Gelb gedruckt. Die einzelnen Farbfelder bestehen jeweils aus einem rechteckigen Teil 116 mit fünf daran anschließenden, zackenartigen Dreiecken 118. Die Flächenbedeckung der einzelnen Farben wird damit zu den spitzen Enden der Dreiecke 118 immer geringer. Das Überschreiten der Druckfarbmenge, die vom Druckpapier aufgenommen werden kann, durch den Druckauftrag bei einer bestimmten Farbe wird dadurch sichtbar, dass der unbedruckte Bereich zwischen den Dreiecken 118 teilweise verschwindet.

Die erste Reihe 112 entspricht dem Farbsatz des Analogdruckverfahrens (subtraktive Farbmischung). Die zweite Reihe 114 entspricht einem Äquivalent zum RGB-Farbsatz, d.h. den Basisfarben einer additiven Farbmischung, wie sie in der digitalen Bildschirmtechnik verwendet wird.

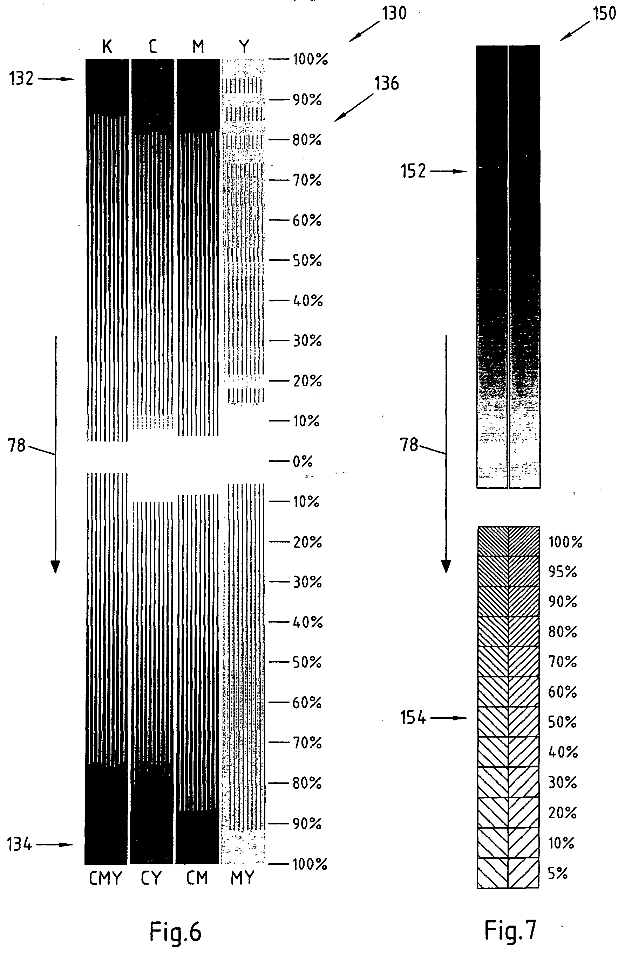

Fig. 6 zeigt ein weiteres Testmuster 130, mit dem das Verhalten der Druckfarben kontrolliert werden kann. Das Testmuster 130 weist eine erste Reihe 132 und eine zweite Reihe 134 mit jeweils vier Feldern von vorzugsweise jeweils 10 mm x 100 mm Größe auf. Jedes Feld besteht aus einem Linienrasterverlauf mit von 100% bis 0% abnehmender Linienbreite. In der ersten Reihe 132 sind von links nach rechts die Druckfarben Schwarz, Cyan, Magenta und Gelb gedruckt. In der zweiten Reihe 134 sind durch Übereinanderdrucken von mindestens zwei Druckfarben von links nach rechts die Farbe Schwarz aus je 100% Cyan, Magenta und Gelb, die Farbe Grün aus je 100% Cyan und Gelb, die Farbe Violett aus je 100% Cyan und Magenta und die Farbe Rot aus je 100% Magenta und Gelb gedruckt. Die Prozentangaben auf der Skala 136 zeigen die jeweilige Flächenbedeckung der Farben an. Auf der Seite mit der hohen Flächenbedeckung kann der Prozentsatz der Flächenbedeckung bestimmt werden, bei dem die Farben beim Drucken ineinander fließen, d.h. der unbedruckte Zwischenraum zwischen den Linien nicht mehr sichtbar ist. Auf der Seite der geringen Flächenbedeckung kann bestimmt werden, ab welchem Prozentwert die Farbe wegbricht, d.h. keine Linie mehr sichtbar ist. Für einen qualitativ ausreichenden Druck sollte das Ineinanderfließen erst bei mehr als 95% Flächenbedeckung erfolgen; das Wegbrechen sollte erst bei weniger als 3%, bevorzugt weniger als 2% erfolgen.

Fig. 7 zeigt ein weiteres Testmuster 150 zur Überprüfung der Graubalance. In der ersten Reihe 152 sind nebeneinander zwei Verläufe von 100 bis 0% Farbanteil gezeigt, und zwar in der linken Spalte durch Übereinanderdrucken der Druckfarben Cyan, Magenta und Gelb und in der rechten Spalte als Referenz durch den entsprechenden Tonwert der Farbe Schwarz.

In der zweiten Reihe 154 sind zwei Folgen verschiedener Grauwerte dargestellt, und zwar von 10% bis 100% in 10%-Schritten sowie zusätzlich mit den Schritten 95% und 5%. In der linken Spalte ergeben sich die Grauwerte durch das Übereinanderdrucken der Bunttöne der Druckfarben, Cyan, Magenta und Gelb, und in der rechten Spalten durch den entsprechenden Tonwert der Druckfarbe Schwarz.

In beiden Reihen 152, 154 können die mit den Bunttönen gedruckte Grauwerte der linken Spalte nun mit den entsprechenden Referenzfeldern der rechten Spalte verglichen werden. Hierdurch können die Qualität der Druckfarben sowie die Graubalance kontrolliert werden. Durch eine quantitative Ermittlung der Farbabweichung in der linken Spalte können die einzelnen Anteile der Bunttöne der Druckfarben zur Darstellung von Grautönen und damit die Graubalance korrigiert werden. Die Referenzfelder der rechten Spalte haben den Vorteil, dass auf eine separate Grauwert-Referenz verzichtet werden kann. Es ist jedoch auch denkbar, dass anstelle oder zusätzlich zur rechten Spalte auch eine separate Grauwert-Referenz verwendet wird.

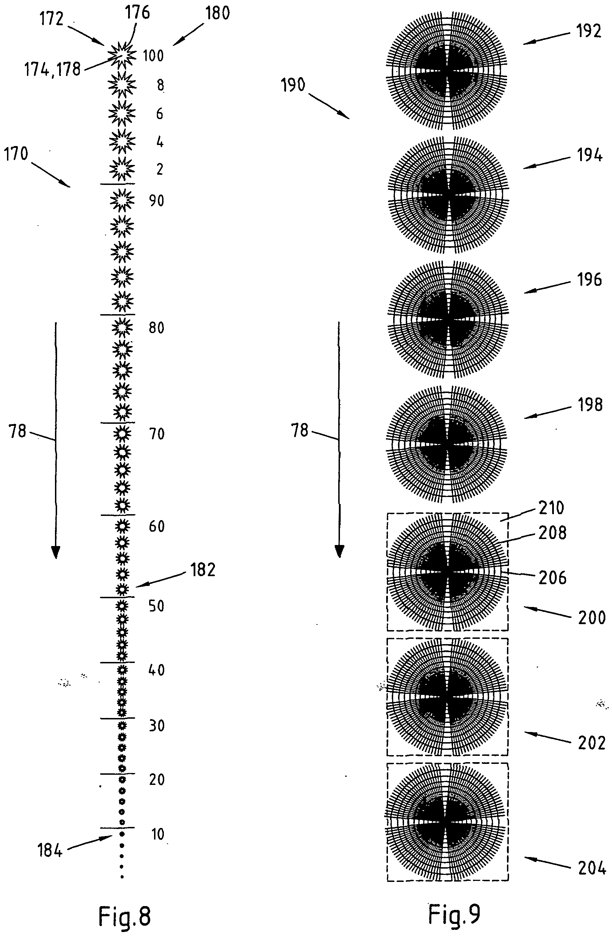

Fig. 8 zeigt ein weiteres Testmuster 170 zur Kontrolle der Druckschärfe. Das Testmuster weist eine Vielzahl, vorzugsweise zwischen 30 und 70, beispielsweise 50, in ihrer Größe abnehmende, gleichartige Objekte 172 auf, welche in diesem Beispiel als sternförmige Konturen ausgebildet sind.

Alternativ könnte das Testmuster 170 auch lediglich einige oder nur ein Objekt 172 umfassen. Die sternförmigen Konturen weisen einen unbedruckten Bereich 174 mit einem ersten, schmalen Teilbereich 176 im Bereich der Sternspitzen und einen zweiten, breiten Teilbereich 178 in der Mitte der Objekte auf. Die Breite des unbedruckten Bereichs vergrößert sich an den inneren Ecken der Sternspitzen zwischen den beiden Teilbereichen sprunghaft, d.h. insbesondere unstetig und nicht differenzierbar. Die optionale Skala 180 gibt die Größe der jeweiligen Objekte 172 an.

Mit dem Testmuster 170 bzw. mit den Objekten können nun gleichzeitig zwei verschiedene Druckauflösungswerte überprüft werden. Unterschreitet die Druckauflösung einen ersten Druckauflösungswert, so ist der erste schmale unbedruckte Teilbereich 176 zwischen den umgebenden Konturteilen nicht mehr zu erkennen, während der zweite unbedruckte Teilbereich 178 noch sichtbar ist. Dies ist beispielsweise bei Objekt 182 der Fall. Erst wenn die Druckauflösung auch einen zweiten Druckauflösungswert unterschreitet, ist auch der breite unbedruckte Teilbereich 178 zwischen den umgebenden Konturteilen nicht mehr zu erkennen. Dies ist bei Objekt 184 der Fall. Mit einem einzelnen Objekt 172 kann damit überwacht werden, ob sich die Druckauflösung oberhalb, unterhalb oder zwischen den beiden Druckauflösungswerten befindet. Mit der in Fig. 8 gezeigten Mehrzahl von Objekten verschiedener Größen kann die Druckauflösung sogar noch genauer bestimmt werden.

Fig. 9 zeigt ein weiteres Testmuster 190 zur Überprüfung und optional zur Korrektur der relativen Position der Druckköpfe zueinander. Insbesondere können mit dem Testmuster 190 auch die Rechtwinkligkeit der Druckköpfe überprüft und eventuelle Verdrehungen korrigiert werden. Das Testmuster 190 umfasst vorliegend sieben Teststerne 192, 194, 196, 198, 200, 202 und 204, wobei natürlich auch eine andere Zahl von Teststernen möglich ist. Die Teststerne weisen jeweils eine Anordnung konzentrischer Kreise 206, einen in vier Segmente aufgeteiltes Kreiselement 208 und optional ein quadratisches Hintergrundelement 210 auf. Das Kreiselement 208 besteht, ähnlich einem Siemensstern, aus einer Vielzahl radial verlaufender Linien, wobei benachbarte Linien bezogen auf den Mittelpunkt des Kreiselements 208 jeweils um einen kleinen Winkel, beispielsweise zwischen 0,5° und 3°, voneinander beabstandet sind.

Mit den Teststernen kann die Ausrichtung der Auftragsmittel der Druckvorrichtung, d.h. insbesondere der Druckköpfe zueinander kontrolliert werden. Bei einer optimalen Ausrichtung liegen der Mittelpunkt der konzentrischen Kreise 206 und der Mittelpunkt des Kreiselements 208 übereinander. Weiterhin ist das Kreiselement 208 bei optimaler Ausrichtung vollständig in das bei den Teststernen 200, 202 und 204 gedruckte Hintergrundelement 206 eingebettet. Anhand der Verschiebung der einzelnen Elemente eines Teststerns zueinander kann damit eine Abweichung der Druckköpfe von der optimalen Ausrichtung zueinander kontrolliert und optional gemessen werden. Anhand der Winkellage der ausgelassenen Segmente des Kreiselements 208 kann zudem die Rechtwinkligkeit bzw. eine Verdrehung der Druckköpfe kontrolliert und optional bestimmt werden.

Während die Teststerne 192, 194, 196, 198 in den Druckfarben Schwarz, Magenta, Gelb und Cyan gedruckt sind, weisen die Teststerne 200, 202 und 204 einen Überdruck von mehreren Druckfarben auf. Beim Teststern 200 ist das Hintergrundelement 206 grün durch Übereinanderdrucken der Druckfarben Cyan und Gelb und das Kreiselement 208 rot durch Übereinanderdrucken der Druckfarben Magenta und Gelb oder alternativ magentafarben durch den einfachen Druck der Druckfarbe Magenta. Bei dem Teststern 202 ist das Hintergrundelement 206 violett durch Übereinanderdrucken der Druckfarben Cyan und Magenta und das Kreiselement 208 gelb. Bei dem Teststern 204 ist umgekehrt das Hintergrundelement 206 gelb und das Kreiselement 208 violett. Alternativ können das Hintergrundelement 206 des Teststerns 202 und das Kreiselement 208 des Teststerns 204 auch cyanfarben sein.

Das Hintergrundelement 206 kann bei den Teststernen 200, 202, 204 entweder vollflächig oder unter Auslassung der durch das jeweilige Kreiselement 208 ausgefüllten Bereiche in der jeweiligen Farbe gedruckt werden.

Es hat sich gezeigt, dass insbesondere durch den Überdruck mindestens zweier Druckfarben die relative Ausrichtung der Auftragsmittel besonders gut kontrolliert und optional korrigiert werden kann.

Weiterhin kann mit den Teststernen 192, 194, 196, 198, 200, 202, 204 auch die Druckauflösung anhand der Größe der gleichmäßig gefärbten Fläche in der Mitte der Kreiselemente bestimmt werden. Je größer diese Fläche bei einem in einer Farbe gedruckten Kreiselement ist, desto geringer ist die Druckauflösung der jeweiligen Farbe.

## Patentansprüche

1. Verfahren zur Herstellung von Dekorpapier,
- bei dem ein Druckpapier (2) bereit gestellt wird, vorzugsweise durch Abrollen von einer Rolle,
- bei dem das Druckpapier (2) mittels einer digitalen Druckvorrichtung (4) mit einem Dekor (6) bedruckt wird und
- bei dem das Druckpapier (2) mittels der digitalen Druckvorrichtung (4) in einem randseitigen Teststreifen (16) mit mindestens einem Testmuster (18, 20, 22, 24, 80, 110, 130, 150, 170, 190) bedruckt wird,
- wobei die Druckvorrichtung (4) für mindestens zwei verschiedene Druckfarben jeweils mindestens eine Düse (58) als Auftragsmittel aufweist,
**dadurch gekennzeichnet,**
- **dass** die zwei Druckfarben in zumindest einem Teil des Testmusters (16, 18, 20, 22, 24, 80, 110, 130, 150, 170, 190) übereinander gedruckt werden und
- **dass** ein Testmuster (18, 20, 22, 24, 80, 110, 130, 150, 170, 190) zur Überprüfung der maximalen vom Druckpapier (2) aufzunehmenden Druckfarbmenge gedruckt wird, wobei das Testmuster (16, 18, 20, 22, 24, 80, 110, 130, 150, 170, 190) eine Folge von Bereichen mit unterschiedlichen Flächen bedeckungen, inbesondere einer Sekundär- oder Tertiärfarbe, aufweist.

2. Verfahren nach Anspruch 1,
**dadurch gekennzeichnet,**
**dass** mehrere Testmuster (18, 20, 22, 24, 80, 110, 130, 150, 170, 190), insbesondere mindestens drei, vorzugsweise mindestens fünf Testmuster (18, 20, 22, 24, 80, 110, 130, 150, 170, 190), gedruckt werden.

3. Verfahren nach Anspruch 1 oder 2,
**dadurch gekennzeichnet,**
**dass** das Testmuster (18, 20, 22, 24, 80, 110, 130, 150, 170, 190) optisch, vorzugsweise mittels eines Scanners oder einer Kamera (30), erfasst wird und dass die Druckqualität automatisch überwacht wird.

4. Verfahren nach einem der Ansprüche 1 bis 3,
**dadurch gekennzeichnet,**
**dass** beim Unterschreiten einer vorgegebenen Druckqualität automatisch ein Korrekturprozess der Druckvorrichtung initiiert wird.

5. Verfahren nach einem der Ansprüche 1 bis 4,
**dadurch gekennzeichnet,**
**dass** ein Testmuster (18, 20, 22, 24, 80, 110, 130, 150, 170, 190) zur Überprüfung der relativen Ausrichtung der beiden Auftragsmittel zueinander gedruckt wird, dass die relative Ausrichtung der beiden Auftragsmittel zueinander anhand des Testmusters (16, 18, 20, 22, 24, 80, 110, 130, 150, 170, 190) automatisch ausgewertet und automatisch korrigiert wird.

6. Verfahren nach einem der Ansprüche 1 bis 5,
**dadurch gekennzeichnet,**
**dass** die Auftragsmengen der Druckfarben automatisch angepasst werden.

7. Verfahren nach einem der Ansprüche 1 bis 6,
**dadurch gekennzeichnet,**
**dass** ein Testmuster (18, 20, 22, 24, 80, 110, 130, 150, 170, 190) zur Überprüfung der Graubalance der Bunttöne der Druckfarben gedruckt wird und dass die Graubalance automatisch korrigiert wird.

8. Verfahren nach einem der Ansprüche 1 bis 7,
**dadurch gekennzeichnet,**
**dass** ein Testmuster (18, 20, 22, 24, 80, 110, 130, 150, 170, 190) zur Überprüfung der Druckauflösung gedruckt wird, wobei das Testmuster (18, 20, 22, 24, 80, 110, 130, 150, 170, 190) mindestens ein, vorzugsweise eine Reihe gleichartiger Objekte (172) von abnehmender Größe, umfasst, wobei das einzelne Objekt (172) jeweils mindestens einen von einer vorzugsweise sternförmigen Kontur umgebenen unbedruckten Bereich (174) aufweist und wobei der unbedruckte Bereich (174) in einem ersten Teilbereich (176) eine geringere Breite aufweist als in einem zweiten Teilbereich (178), wobei die Breite des unbedruckten Bereichs (174) sich zwischen dem ersten (176) und dem zweiten Teilbereich (178) vorzugsweise unstetig oder nicht differenzierbar vergrößert.

9. Verfahren nach einem der Ansprüche 1 bis 8,
**dadurch gekennzeichnet,**
**dass** eine Mehrzahl verschiedener Testmuster (18, 20, 22, 24, 80, 110, 130, 150, 170, 190) zur Überwachung verschiedener Druckqualitätskriterien gedruckt wird, wobei die Reihenfolge und/oder die Druckhäufigkeit der einzelnen Testmuster (18, 20, 22, 24, 80, 110, 130, 150, 170, 190) automatisch in Abhängigkeit von den jeweils überwachten Druckqualitätskriterien angepasst wird.

10. Verfahren nach einem der Ansprüche 1 bis 9,
**dadurch gekennzeichnet,**
**dass** das Drucken des Dekors (6) nach Durchführung eines Korrekturprozesses automatisch fortgesetzt wird.

11. Verfahren nach einem der Ansprüche 1 bis 10,
**dadurch gekennzeichnet,**
**dass** als Dekor (6) eine Mehrzahl von Dekorabschnitten (10, 12, 14) mit vorgegebenen Dekorabschnittlängen gedruckt wird und dass ein durch einen Korrekturprozess unterbrochener Druck eines der Dekorabschnitte (10, 12, 14) unabhängig vom Ergebnis des Korrekturprozesses fortgesetzt wird, bis der Dekorabschnitt (10, 12, 14) vollständig gedruckt ist.

12. Verfahren nach einem der Ansprüche 1 bis 11,
**dadurch gekennzeichnet,**
**dass** als Dekor (6) eine Mehrzahl von Dekorabschnitten (10, 12, 14) derselben vorgegebenen Dekorabschnittlänge gedruckt wird, dass nach dem Druck eines ersten Dekorabschnitts (10, 12, 14) ein Korrekturprozess durchgeführt wird, dass nach dem Korrekturprozess ein zweiter Dekorabschnitt (10, 12, 14) gedruckt wird und dass das Ende des ersten Dekorabschnitts (10, 12, 14) vom Anfang des zweiten Dekorabschnitts (10, 12, 14) auf dem Dekorpapier um ein ganzzahliges Vielfaches oder um einen ganzzahligen Bruchteil der vorgegebenen Dekorabschnittlänge beabstandet ist.

13. Dekorpapier (28), hergestellt mit einem Verfahren nach einem der Ansprüche 1 bis 12,
- mit einem bedruckten Druckpapier (2),
- wobei das Druckpapier (2) einen vorzugsweise durchgehenden randseitigen Teststreifen (16) aufweist und
- wobei innerhalb des Teststreifens (16) mindestens ein gedrucktes Testmuster (18, 20, 22, 24, 80, 110, 130, 150, 170, 190) angeordnet ist,
**dadurch gekennzeichnet,**
- **dass** das Testmuster (18, 20, 22, 24, 80, 110, 130, 150, 170, 190) mindestens einen Bereich aufweist, in dem mindestens zwei Druckfarben übereinander gedruckt sind und
- **dass** innerhalb des Teststreifens (16) ein Testmuster (18, 20, 22, 24, 80, 110, 130, 150, 170, 190) zur Überprüfung der maximalen vom Druckpapier (2) aufzunehmenden Druckfarbmenge angeordnet ist, wobei das Testmuster (18, 20, 22, 24, 80, 110, 130, 150, 170, 190) eine Folge von Bereichen mit unterschiedlichen Flächenbedeckungen, insbesondere einer Sekundär- oder Tertiärfarbe, aufweist.

14. Dekorpapier nach Anspruch 13,
**dadurch gekennzeichnet,**
**dass** innerhalb des Teststreifens (16) Testmuster (18, 20, 22, 24, 80, 110, 130, 150, 170, 190) zur Überprüfung der Ausrichtung der Auftragsmittel der Druckvorrichtung, insbesondere der Druckkopf- bzw. Druckdüsenausrichtung, der Düsenfunktion, der maximalen vom Druckpapier (2) aufzunehmenden Druckfarbmenge, der Graubalance, der Druckschärfe und/oder der Druckauflösung angeordnet sind.

15. Dekorpapier nach einem der Ansprüche 13 oder 14,
**dadurch gekennzeichnet,**
**dass** innerhalb des Teststreifens (16) ein Testmuster (18, 20, 22, 24, 80, 110, 130, 150, 170, 190) zur Überprüfung der Graubalance angeordnet ist, wobei das Testmuster (18, 20, 22, 24, 80, 110, 130, 150, 170, 190) ein mit den Bunttönen der Druckfarben bedrucktes Graufeld und optional ein mit einer schwarzen Druckfarbe bedrucktes entsprechendes Referenzfeld aufweist.

16. Dekorpapier nach einem der Ansprüche 13 bis 15,
**dadurch gekennzeichnet,**
**dass** innerhalb des Teststreifens (16) ein Testmuster (18, 20, 22, 24, 80, 110, 130, 150, 170, 190) zur Überprüfung der Druckauflösung angeordnet ist, wobei das Testmuster (18, 20, 22, 24, 80, 110, 130, 150, 170, 190) mindestens ein, vorzugsweise eine Reihe gleichartiger Objekte (172) von abnehmender Größe, umfasst, wobei das einzelne Objekt (172) jeweils mindestens einen von einer vorzugsweise sternförmigen Kontur umgebenen unbedruckten Bereich (174) aufweist und wobei der unbedruckte Bereich (174) in einem ersten Teilbereich (176) eine geringere Breite aufweist als in einem zweiten Teilbereich (178), wobei die Breite des unbedruckten Bereichs (174) sich zwischen dem ersten (176) und dem zweiten Teilbereich (178) vorzugsweise unstetig oder nicht differenzierbar vergrößert.

## Claims

1. Method for producing decorative paper,
- in which a printing paper (2) is provided, preferably by unrolling from a roll,
- in which the printing paper (2) is printed with a decoration (6) by means of a digital printing device (4) and
- in which the printing paper (2) is printed with at least one test pattern (18, 20, 22, 24,80,110,130,150,170,190) in an edge-side test strip (16) by means of the digital printing device (4),
- wherein the printing device (4) has at least one nozzle (58) as an application means for at least two different printing inks respectively,
**characterised in that**
- the two printing inks are printed one over the other in at least one part of the test pattern (16, 18, 20, 22, 24, 80, 110, 130, 150, 170, 190), and
- a test pattern (18,20,22,24,80,110,130,150,170,190) is printed to check the maximum quantity of printing ink to be received by the printing paper (2), wherein the test pattern (16, 18, 20, 22, 24,80,110,130,150,170,190) has a sequence of areas with different surface coverings, in particular a secondary or tertiary ink.

2. Method according to Claim 1,
**characterised in that**
several test patterns (18, 20, 22, 24, 80, 110, 130, 150, 170, 190), in particular at least three, preferably at least five test patterns (18, 20, 22, 24, 80, 110, 130, 150, 170, 190) are printed.

3. Method according to Claim 1 or 2,
**characterised in that**
the test pattern (18, 20, 22, 24, 80, 110, 130, 150, 170, 190) is detected optically, preferably by means of a scanner or a camera (30); and the print quality is monitored automatically.

4. Method according to any one of Claims 1 to 3,
**characterised in that**
when falling below a predetermined print quality, a correction process of the printing device is initiated automatically.

5. Method according to any one of Claims 1 to 4,
**characterised in that**
a test pattern (18, 20, 22, 24, 80, 110, 130, 150, 170, 190) is printed to check the relative alignment of the two application means to each other; the relative alignment of the two application means to each other is evaluated automatically and is corrected automatically by means of the test pattern (16, 18, 20, 22, 24, 80, 110,130,150,170,190).

6. Method according to any one of Claims 1 to 5,
**characterised in that**
the application quantities of the printing inks are adapted automatically.

7. Method according to any one of Claims 1 to 6,
**characterised in that**
a test pattern (18,20, 22, 24,80,110,130,150,170,190) is printed to check the grey balance of the colour shades of the printing inks; and the grey balance is corrected automatically.

8. Method according to any one of Claims 1 to 7,
**characterised in that**
a test pattern (18, 20, 22, 24, 80, 110, 130, 150, 170, 190) is printed to check the printing resolution, wherein the test pattern (18, 20, 22, 24, 80, 110, 130, 150, 170, 190) comprises at least one, preferably a series of similar objects (172) of decreasing size, wherein the individual object (172) has at least one unprinted area (174) surrounded by a preferably star-shaped contour respectively, and wherein the unprinted area (174) has a smaller width in a first partial area (176) than in a second partial area (178), wherein the width of the unprinted area (174) is enlarged between the first (176) and the second partial area (178), preferably in an inconstant or non-differentiable manner.

9. Method according to any one of Claims 1 to 8,
**characterised in that**
a plurality of different test patterns (18, 20, 22, 24, 80, 110, 130, 150, 170, 190) is printed to monitor different print quality criteria, wherein the order and/or the printing frequency of the individual test patterns (18, 20, 22, 24, 80, 110, 130, 150,170,190) is adapted automatically depending on the respectively monitored print quality criteria.

10. Method according to any one of Claims 1 to 9,
**characterised in that**
the printing of the decoration (6) is continued automatically after implementation of a correction process.

11. Method according to any one of Claims 1 to 10,
**characterised in that**
a plurality of decorative sections (10, 12, 14) with predetermined decorative section lengths is printed as a decoration (6); and a printing of one of the decorative sections (10, 12, 14) that is interrupted by a correction process is continued independent of the result of the correction process, until the decorative section (10, 12, 14) is completely printed.

12. Method according to any one of Claims 1 to 11,
**characterised in that**
a plurality of decorative sections (10, 12, 14) of the same predetermined decorative section length is printed as a decoration (6); after the printing of a first decorative section (10, 12, 14), a correction process is implemented; after the correction process, a second decorative section (10, 12, 14) is printed; and the end of the first decorative section (10, 12, 14) is at a distance from the beginning of the second decorative section (10, 12, 14) on the decorative paper by an integer multiple or by an integer fraction of the predetermined decorative section length.

13. Decorative paper (28), produced using a method according to any one of Claims 1 to 12,
- with a printed printing paper (2),
- wherein the printing paper (2) has a preferably continuous edge-side test strip (16) and
- wherein at least one printed test pattern (18, 20, 22, 24, 80, 110, 130, 150, 170, 190) is arranged within the test strip (16),
**characterised in that**
- the test pattern (18, 20, 22, 24, 80, 110, 130, 150, 170, 190) has at least one area in which at least two printing inks are printed one over the other and
- a test pattern (18, 20, 22, 24, 80, 110, 130, 150, 170,190) is arranged within the test strip (16) to check the maximum quantity of printing ink to be received by the printing paper (2), wherein the test pattern (18, 20, 22, 24, 80, 110, 130, 150, 170, 190) has a sequence of areas with different surface coverings, in particular a secondary or tertiary ink.

14. Decorative paper according to Claim 13,
**characterised in that**
test patterns (18, 20, 22, 24, 80, 110, 130, 150, 170, 190) are arranged within the test strip (16) to check the alignment of the application means of the printing device, in particular the printing head or printing nozzle alignment, the nozzle function, the maximum quantity of printing ink to be received by the printing paper (2), the grey balance, the printing sharpness and/or the printing resolution.

15. Decorative paper according to any one of Claims 13 or 14,
**characterised in that**
a test pattern (18, 20, 22, 24, 80, 110, 130, 150, 170, 190) is arranged within the test strip (16) to check the grey balance, wherein the test pattern (18, 20, 22, 24, 80, 110, 130, 150, 170, 190) has a grey patch printed with the colour shades of the printing inks and optionally has a corresponding reference patch printed with a black printing ink.

16. Decorative paper according to any one of Claims 13 to 15,
**characterised in that**
a test pattern (18, 20, 22, 24, 80, 110, 130, 150, 170, 190) is arranged within the test strip (16) to check the printing resolution, wherein the test pattern (18, 20, 22, 24, 80, 110, 130, 150, 170, 190) comprises at least one, preferably a series of similar objects (172) of decreasing size, wherein the individual object (172) has at least one unprinted area (174) surrounded by a preferably star-shaped contour respectively, and wherein the unprinted area (174) has a smaller width in a first partial area (176) than in a second partial area (178), wherein the width of the unprinted area (174) is enlarged between the first (176) and the second partial area (178), preferably in an inconstant or non-differentiable manner.

## Revendications

1. Procédé pour la fabrication de papier décoratif,
- dans lequel le papier d'impression (2) est mis à disposition, de préférence par déroulement d'un rouleau,
- dans lequel un décor (6) est imprimé sur le papier d'impression (2) au moyen d'un dispositif d'impression numérique (4),
et
- dans lequel, au moyen du dispositif d'impression (4), au moins un motif de test (18, 20, 22, 24, 80, 110, 130, 150, 170, 190) est imprimé sur le papier d'impression (2), dans une bande de test (16), côté bord,
- sachant que le dispositif d'impression (4) est doté, pour chacune d'au moins deux couleurs d'impression différentes, d'au moins une buse (58) en tant que moyen d'application,
**caractérisé en ce que**
- les deux couleurs d'impression sont imprimées l'une sur l'autre dans au moins une partie du motif de test (18, 20, 22, 24, 80, 110, 130, 150, 170, 190), et
- un motif de test (18, 20, 22, 24, 80, 110, 130, 150, 170, 190) est imprimé pour vérifier la quantité de couleur d'impression maximale à absorber par le papier d'impression (2), sachant que le motif de test (18, 20, 22, 24, 80, 110, 130, 150, 170, 190) comprend une suite de domaines avec des recouvrements de surface différents, en particulier avec une couleur secondaire ou une couleur tertiaire.

2. Procédé selon la revendication 1,
**caractérisé en ce que** plusieurs motifs de test (18, 20, 22, 24, 80, 110, 130, 150, 170, 190), en particulier au moins trois, de préférence au moins cinq motifs de test (18, 20, 22, 24, 80, 110, 130, 150, 170, 190) sont imprimés.

3. Procédé selon revendication 1 ou 2,
**caractérisé en ce que** le motif de test (18, 20, 22, 24, 80, 110, 130, 150, 170, 190) est saisi optiquement, de préférence au moyen d'un scanner ou d'une caméra (30). et que la qualité de l'impression est contrôlée automatiquement.

4. Procédé selon l'une des revendications 1 à 3,
**caractérisé en ce que**, lorsque la qualité d'une impression est inférieure à la qualité d'impression prédéterminée, un processus de correction du dispositif d'impression est initialisé automatiquement.

5. Procédé selon l'une des revendications 1 à 4,
**caractérisé en ce que**, pour le contrôle de l'orientation relative des deux moyens d'application par rapport l'un à l'autre, un motif de test (18, 20, 22, 24, 80, 110, 130, 150, 170, 190) est imprimé, que l'orientation relative des deux moyens d'application par rapport l'un à l'autre est évaluée automatiquement au moyen du motif de test (18, 20, 22, 24, 80, 110, 130, 150, 170, 190) et est corrigée automatiquement.

6. Procédé selon l'une des revendications 1 à 5,
**caractérisé en ce que** les quantités de couleurs d'impression appliquées sont adaptées automatiquement.

7. Procédé selon l'une des revendications 1 à 6,
**caractérisé en ce que**, pour le contrôle de l'équilibre du gris des teintes des couleurs d'impression, un motif de test (18, 20, 22, 24, 80, 110, 130, 150, 170, 190) est imprimé et q u e l'équilibre du gris est corrigé automatiquement.

8. Procédé selon l'une des revendications 1 à 7,
**caractérisé en ce que**, pour le contrôle de la résolution d'impression, un motif de test (18, 20, 22, 24, 80, 110, 130, 150, 170, 190) est imprimé, sachant que le motif de test (18, 20, 22, 24, 80, 110, 130, 150, 170, 190) comprend au moins un objet, de préférence une série d'objets du même genre (172), de grandeur décroissante, sachant que chaque objet (172) est doté d'au moins une zone non imprimée (174), qui est entourée d'un contour présentant, de préférence, la forme d'une étoile, et sachant que la zone non imprimée (174) est dotée, dans une première zone partielle (176), d'une largeur plus petite que dans une deuxième zone partielle (178), la largeur de la zone non imprimée (174) s'agrandissant, de préférence de manière discontinue ou non différenciable, entre la première zone partielle (176) et la deuxième zone partielle (178).

9. Procédé selon l'une des revendications 1 à 8,
**caractérisé en ce que**, pour le contrôle de différents critères de qualité d'impression, un motif de test (18, 20, 22, 24, 80, 110, 130, 150, 170, 190) est imprimé, sachant que la séquence et / ou la fréquence de chacun des motifs de test (18, 20, 22, 24, 80, 110, 130, 150, 170, 190) est / sont adaptée(s) automatiquement en fonction des critères de qualité d'impression respectivement contrôlés.

10. Procédé selon l'une des revendications 1 à 9,
**caractérisé en ce que** l'impression du décor (6) se poursuit automatiquement après l'exécution d'un processus de correction.

11. Procédé selon l'une des revendications 1 à 10,
**caractérisé en ce que**, comme décor (6), est imprimée une pluralité de sections de décor (10, 12, 14) avec des longueurs de sections de décor prédéterminées, et qu'une impression de l'une des sections de décor (10, 12, 14), ayant été interrompue par un processus de correction, est poursuivie, indépendamment du résultat du processus de correction, jusqu'à ce que ladite section de décor (10, 12, 14) se trouve complètement imprimée.

12. Procédé selon l'une des revendications 1 à 11,
**caractérisé en ce que**, comme décor (6), est imprimée une pluralité de sections de décor (10, 12, 14) de même longueur de sections de décor prédéterminée, qu'un processus de correction est exécuté après l'impression d'une première section de décor (10, 12, 14), qu'une deuxième section de décor (10, 12, 14) est imprimée après l'exécution du processus de correction, et que la fin de la première section de décor (10, 12, 14) est distancée du début de la deuxième section de décor (10, 12, 14) d'un multiple entier ou d'une fraction entière de la longueur de section de décor prédéterminée.

13. Papier décoratif (28) fabriqué avec le procédé selon l'une des revendications 1 à 12, qui comprend
- un papier d'impression imprimé (2),
- sachant que le papier d'impression (2) est doté d'une bande de test (16) marginale, de préférence continue, et
- sachant qu'au moins un motif de test (18, 20, 22, 24, 80, 110, 130, 150, 170, 190) est disposé à l'intérieur de la bande de test (16),
**caractérisé en ce que**
- le motif de test (18, 20, 22, 24, 80, 110, 130, 150, 170, 190) est doté d'au moins une zone, dans laquelle au moins deux couleurs d'impression sont imprimées l'une sur l'autre, et
- un motif de test (18, 20, 22, 24, 80, 110, 130, 150, 170, 190) est prévu pour vérifier la quantité de couleur d'impression maximale à absorber par le papier d'impression (2), sachant que le motif de test (18, 20, 22, 24, 80, 110, 130, 150, 170, 190) est doté d'une suite de champs présentant des recouvrements de surface différents, en particulier avec une couleur secondaire ou une couleur tertiaire.

14. Papier décoratif selon la revendication 13,
**caractérisé en ce que** des motifs de test (18, 20, 22, 24, 80, 110, 130, 150, 170, 190) sont disposés à l'intérieur de la bande de test (16) pour le contrôle de l'orientation du moyen d'application du dispositif d'impression, en particulier de l'orientation de la tête d'impression, respectivement des buses d'impression, du fonctionnement des buses, de la quantité maximale de couleur à absorber par le papier d'impression (2), de l'équilibre du gris, de la netteté de l'impression et / ou de la résolution,.

15. Papier décoratif selon revendication 13 ou 14,
**caractérisé en ce que**, pour le contrôle de l'équilibre du gris, un motif de test (18, 20, 22, 24, 80, 110, 130, 150, 170, 190) est disposé à l'intérieur de la bande de test (16), sachant que le motif de test (18, 20, 22, 24, 80, 110, 130, 150, 170, 190) est doté d'un champ gris, imprimé avec les teintes des couleurs d'impression, et, en option, un champ de référence correspond, qui est imprimé avec une encre d'impression noire.

16. Papier décoratif selon l'une des revendications 13 à 15,
**caractérisé en ce que**, pour le contrôle de la résolution d'impression, un motif de test (18, 20, 22, 24, 80, 110, 130, 150, 170, 190) est disposé à l'intérieur de la bande de test (16), sachant que le motif de test (18, 20, 22, 24, 80, 110, 130, 150, 170, 190) comprend au moins un objet, de préférence une série d'objets du même genre (172), de grandeur décroissante, sachant que chaque objet (172) est doté d'au moins une zone non imprimée (174), qui est entourée d'un contour présentant, de préférence, la forme d'une étoile, et sachant que la zone non imprimée (174) est dotée, dans une première zone partielle (176), d'une largeur plus petite que dans une deuxième zone partielle (178), la largeur de la zone non imprimée (174) s'agrandissant, de préférence de manière discontinue ou non différenciable, entre la première zone partielle (176) et la deuxième zone partielle (178).
